# EUROPÄISCHE PATENTSCHRIFT

(11) **EP 0 658 721 B1**
(45) Veröffentlichungstag und Bekanntmachung des Hinweises auf die Patenterteilung: **24.09.1997**
(21) Anmeldenummer: 94119788.1
(22) Anmeldetag: 15.12.1994
(51) Int. Cl.: F21S 3/14, F21V 7/16, G02B 27/02, G03B 21/54, G03B 21/64

(54) **Beleuchtungsvorrichtung**
Lighting device
Dispositif d'éclairage

(30) Priorität: 18.12.1993 DE 9319537 U
(43) Veröffentlichungstag der Anmeldung: 21.06.1995
(73) Patentinhaber: VH Lichttechnische Spezialgeräte GmbH, D-67433 Neustadt/Weinstr. (DE)
(72) Erfinder:
(74) Vertreter: Stenger, Watzke & Ring Patentanwälte

(56) Entgegenhaltungen:
- AT-A- 202 652
- AT-A- 379 006
- DE-A- 2 523 643
- FR-A- 2 653 530
- GB-A- 1 482 743
- GB-A- 2 113 864
- US-A- 1 782 629
- US-A- 3 686 495
- US-A- 4 007 365
- US-A- 4 872 098

## Beschreibung

Die Erfindung betrifft eine Beleuchtungsvorrichtung, insbesondere zum Einsatz in Qualitätskontrollverfahren, mit wenigstens einer Lichtquelle, wenigstens einem Umlenkreflektor und wenigstens einer Reflektionsfläche.

Gattungsgemäße Beleuchtungsvorrichtungen sind an sich bekannt. Bei industriellen Produktionsprozessen werden im Bereich der Produktionsbänder Qualitätskontrollverfahren durchgeführt, zu denen auch die visuelle Qualitätskontrolle gehört. Es ist bekannt, daß eine aussagekräftige visuelle Qualitätskontrolle von der Beleuchtung der überwachten Bereiche und der überwachten Produkte abhängt. Zu diesem Zwecke werden Beleuchtungsvorrichtungen zusammengestellt, bei welchen das Licht einer Lichtquelle durch Umlenkreflektoren zur Bestrahlung einer von der Lichtquelle entfernten Reflektionsfläche umgelenkt wird. Als Reflektionsfläche werden vorzugsweise sogenannte Lichtsegel eingesetzt, die aus einer Vielzahl reflektierender Lamellen zusammengestellt sind. Vom Lichtsegel wird das Licht in der gewünschten Weise auf den zu überwachenden Bereich reflektiert.

Um optimale Beleuchtungsverhältnisse zu gewährleisten, müssen die Lichtquelle, die Umlenkreflektoren und die Reflektionsfläche optimal zueinander ausgerichtet und die Umlenkreflektoren und insbesondere die Reflektionsfläche exakt eingestellt werden. Derartige Installationen sind sehr aufwendig und werden im Bereich der Produktionsbänder als ortsfeste Installation angeordnet.

Ein Nachteil dieser vorbekannten Vorrichtung besteht darin, daß die Installation der Bestandteile mit sehr großer Sorgfalt geplant werden muß. Bereits kleine Fehler bei der Vorinstallation beispielsweise der Haltevorrichtungen können zu unbrauchbaren Beleuchtungsverhältnissen führen. Durch die ortsfeste Installation ist die vorbekannte Beleuchtungsvorrichtung sehr aufwendig und kostenintensiv, sowohl hinsichtlich der verwendeten Teile als auch hinsichtlich der Montage. Schließlich ist die vorbekannte Beleuchtungsvorrichtung störanfällig, da insbesondere die Lichtquelle und die dazugehörigen Umlenkreflektoren im Produktions- bzw. Arbeitsbereich angeordnet sind und leicht versehentlich verstellt werden können. Wegen des Abstandes der Beleuchtungsvorrichtung zum Lichtsegel können die Lichtverhältnisse ungünstig beeinflußt werden. Da es jedoch für die gewünschten visuellen Qualitätskontrollen darauf ankommt, daß der Strahlenweg des Lichtes exakt definiert ist, also Lichtmischung, Parallelität und dergleichen eindeutig bestimmt sind, können sich derartige Störungen auf die gesamte Produktion auswirken.

Davon ausgehend liegt der Erfindung die **Aufgabe** zugrunde, eine Beleuchtungsvorrichtung der gattungsgemäßen Art dahingehend zu verbessern, daß diese mit einem geringen wirtschaftlichen Aufwand herstellbar und/oder installierbar ist, einfach eingerichtet werden kann, hinsichtlich des Einsatzortes variabel und insgesamt störunanfällig ist.

Zur technischen **Lösung** dieser Aufgabe wird die gattungsgemäße Beleuchtungsvorrichtung dadurch verbessert, daß die wenigstens eine Lichtquelle, der wenigstens eine Umlenkreflektor und wenigstens eine Reflektionsfläche miteinander zu einer Baugruppe verbunden sind.

Durch die erfindungsgemäße Beleuchtungsvorrichtung wird ermöglicht, daß die Lichtquelle, der Umlenkreflektor und die Reflektionsfläche zueinander in einer Grundeinstellung ausgerichtet werden, um anschließend als einheitliche Baugruppe relativ zum zu überwachenden Bereich angeordnet zu werden. Damit wird die Einrichtung der Beleuchtungsvorrichtung erheblich vereinfacht und somit der Einsatz derartiger Vorrichtungen wirtschaftlicher. Weiterhin können sämtliche Bauteile der Vorrichtung in einem störunanfälligen Bereich relativ zum zu überwachenden Bereich angeordnet werden.

In vorteilhafter Weise ist die Lichtquelle eine Leuchte mit einem Gehäuse mit einer im wesentlichen rechteckigen Vorderfront. Gemäß einem vorteilhaften Vorschlag der Erfindung ist der Umlenkreflektor an dem Lichtquellengehäuse im Bereich der Frontfläche angeordnet. Der Umlenkreflektor kann dann die für den Einsatzzweck gewünschte Form aufweisen, so daß die gewünschte Beleuchtung erzielbar ist. Wenn, wie weiterhin in vorteilhafter Weise vorgeschlagen, die Reflektionsfläche innerhalb des Umlenkreflektors angeordnet ist, hat die gesamte Beleuchtungsvorrichtung einen einteiligen Charakter, wobei das Leuchtengehäuse durch den Umlenkreflektor vergrößert wird und die erforderlichen Reflektionsflächen im Umlenkreflektor angeordnet sind. Die Lichtquelle kann zweckmäßigerweise mit wenigstens einem Filter versehen sein, welcher im Strahlengang angeordnet ist. Die Qualität, der Strahlenbereich und gegebenenfalls auch die Polarisierung des Lichtes lassen sich durch die entsprechenden Filter vorgeben.

Diese im wesentlichen einteilige Bauform läßt sich leicht im Bereich einer Decke eines Labors oder eines Produktionsbereiches anordnen. Es brauchen dann nur noch die Reflektoren so zueinander eingestellt werden, daß die gewünschte Beleuchtung in dem dafür vorgesehenen Bereich erhalten wird. In vorteilhafter Weise ist die Refelektorfläche ein Lichtsegel, welches vorteilhaft aus einzelnen Reflektorlamellen besteht. So kann in vorteilhafter Weise das gesamte Lichtsegel verstellbar sein, oder zusätzlich oder alternativ auch einzelne Reflektorlamellen verstellt werden.

Mit Vorteil wird vorgeschlagen, daß in dem Umlenkreflektor dem Lichtsegel gegenüberliegend eine verstellbare Abdeckklappe angeordnet ist. Dadurch läßt sich der Strahlungsweg des Lichtes begrenzen und einstellen.

Zur Verbesserung der Einrichtbarkeit sowie des variablen Einsatzes der erfindungsgemäßen Beleuchtungsvorrichtung wird vorgeschlagen, daß die Einheit Lichtquelle, Umlenkreflektor und Reflektionsfläche an einem Traggerüst angeordnet sind. Ein derartiges Traggerüst kann mit Befestigungsvorrichtungen versehen sein, um eine einfache Befestigung im Überwachungsbereich zu gewährleisten. In vorteilhafter Weise ist an dem Traggerüst der zum Beleuchtungsbetrieb erforderliche Schaltschrank angeordnet, in dem in vorteilhafter Weise eine Dimmervorrichtung untergebracht ist.

Die Anzahl der Lichtquellen, der Umlenkreflektoren und der Reflektionsflächen richten sich nach dem gewünschten Einsatzspektrum. Die erfindungsgemäße Beleuchtungsvorrichtung kann aufgrund der integrierten Bauweise mit wenigen Bauteilen kostengünstig hergestellt und eingerichtet werden. Darüber hinaus ist die Vorrichtung hinsichtlich ihres Einsatzes höchst variabel und nur wenig störanfällig.

Weitere Vorteile und Merkmale der Erfindung ergeben sich aus der folgenden Beschreibung anhand der Figuren. Dabei zeigen:
- Figur 1: eine schematische Seitenansicht eines Ausführungsbeispiels für eine erfindungsgemäße Beleuchtungsvorrichtung,
- Figur 2: eine Draufsicht in Richtung des Pfeils II gemäß Figur 1,
- Figur 3: eine Frontansicht der am Traggerüst angeordneten Leuchte,
- Figur 4: eine diagrammartige Darstellung des Strahlenweges des Lichtes bei einer ersten Einstellung der Vorrichtung und
- Figur 5: eine Darstellung gemäß Figur 4 bei einer zweiten Einstellung der Beleuchtungsvorrichtung.

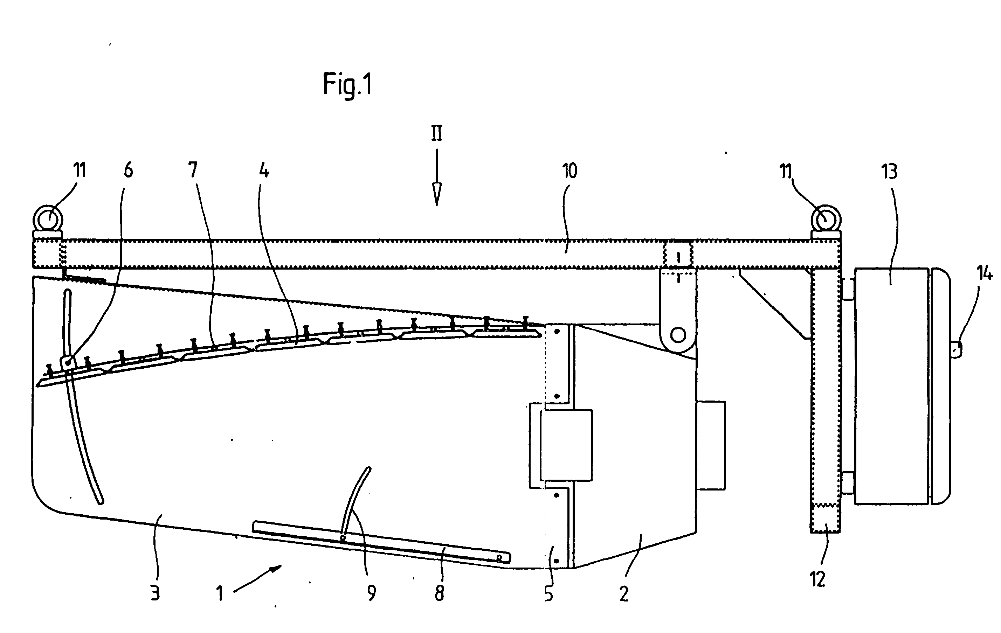

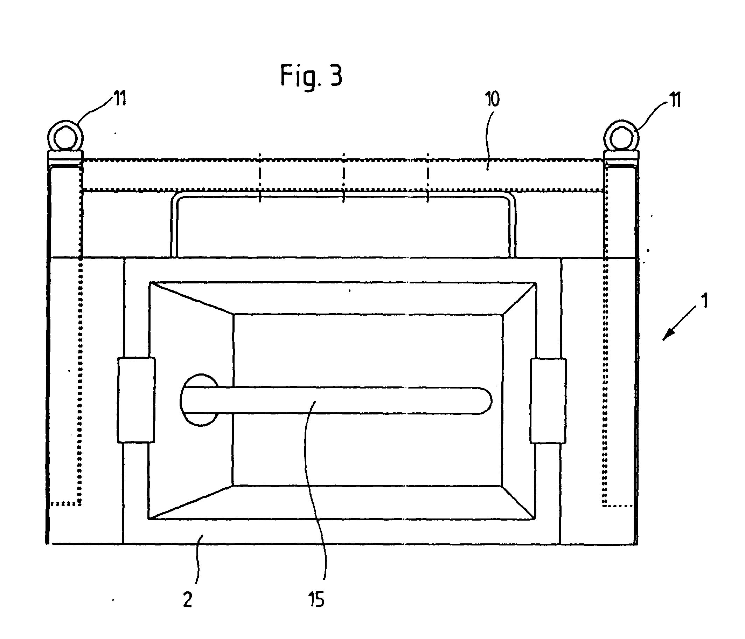

Wie in den Figuren 1 bis 3 gezeigt umfaßt die Beleuchtungsvorrichtung 1 eine Leuchte 2, einen Umlenkreflektor 3 und eine Reflektionsfläche 4. Der Umlenkreflektor 3 ist am Verbindungsbereich 5 an der Leuchte 2 befestigt. Die Reflektionsfläche 4 ist ihrerseits am Umlenkreflektor 3 befestigt und über eine Verstellmimik 6 verstellbar. Die Reflektionsfläche 4 besteht aus einzelnen Reflektionslamellen 7, welche ihrerseits relativ zueinander verstellbar sind.

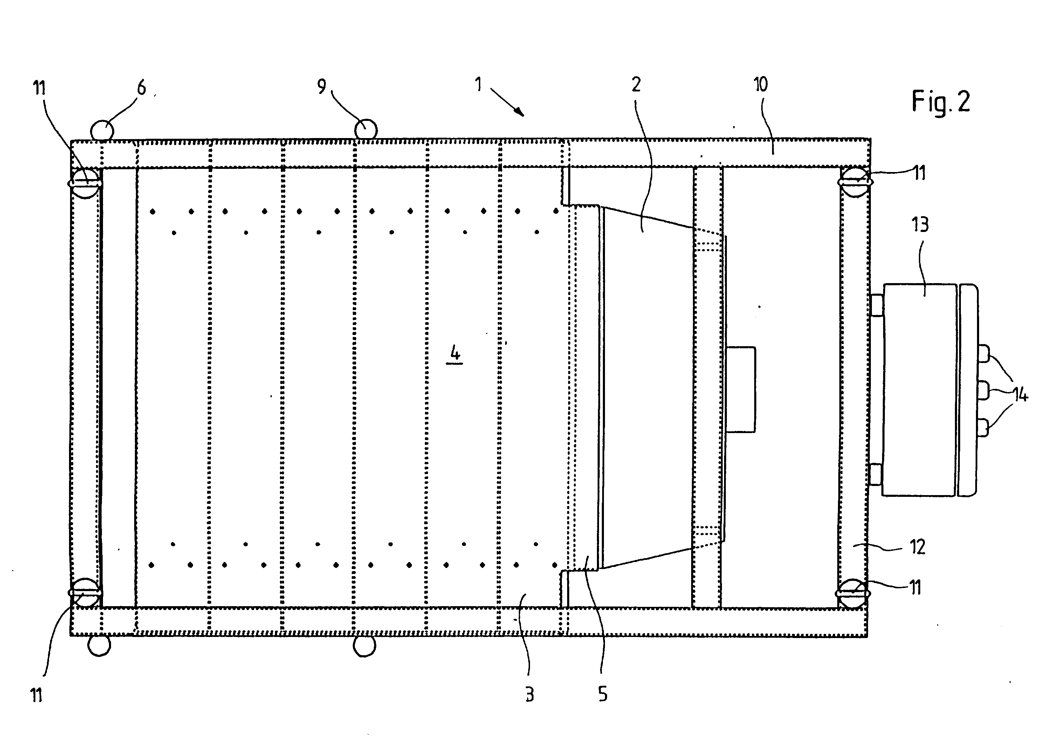

Im Strahlenausgangsbereich ist an dem Umlenkreflektor eine Abblendklappe 8 angeordnet, die einseitig drehbar gelagert über eine Verstellmimik 9 relativ zum Strahlenweg verstellt werden kann. Die aus Leuchte 2, Umlenkreflektor 3, Reflektionsfläche 4 und Abblendklappe 8 bestehende Baugruppe ist an einem Traggerüst 10 angeordnet. Dabei handelt es sich um ein Leichtbau-Traggerüst, an welchem die Baugruppe mittels Haltelaschen befestigt ist. An dem Traggerüst 10 sind Augenschrauben 11 zur Befestigung der Beleuchtungsvorrichtung 1 im Überwachungsbereich angeordnet. An dem Traggerüst 10 ist ein Ansatzprofil 12 angesetzt, an welchem der Schaltschrank 13 mit einer Bedientafel 14 befestigt ist. Die so entstandene Gesamteinheit ist hinsichtlich des Einsatzortes höchst variabel und hinsichtlich der Einzelelemente wirtschaftlich herstell- und einrichtbar. Die Außenabmessungen einer derartigen Vorrichtung liegen beispielsweise bei 1,4 Meter x 0,7 Meter x 0,5 Meter. Die Vorrichtung kann beispielsweise mittels Ketten an einer Decke abgehängt werden, wozu Schnellverbindungselement wie Karabinerhaken oder dergleichen einsetzbar sind. An der Verstellmimik sind einfache von außen leicht zu bedienende Bedienelemente, beispielsweise Kunststoffkugeln, angeordnet, wie in Figur 2 zu sehen. In die Leuchte 2 ist eine Lampe 15 eingesetzt, bei welcher es sich beispielsweise um eine 250 bis 400 Watt-Lampe handeln kann.

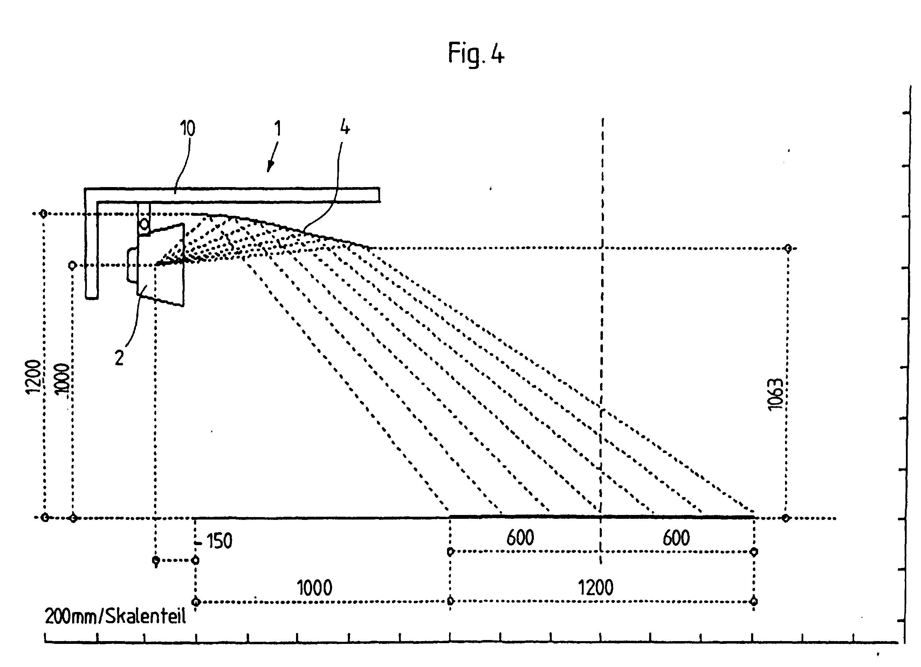

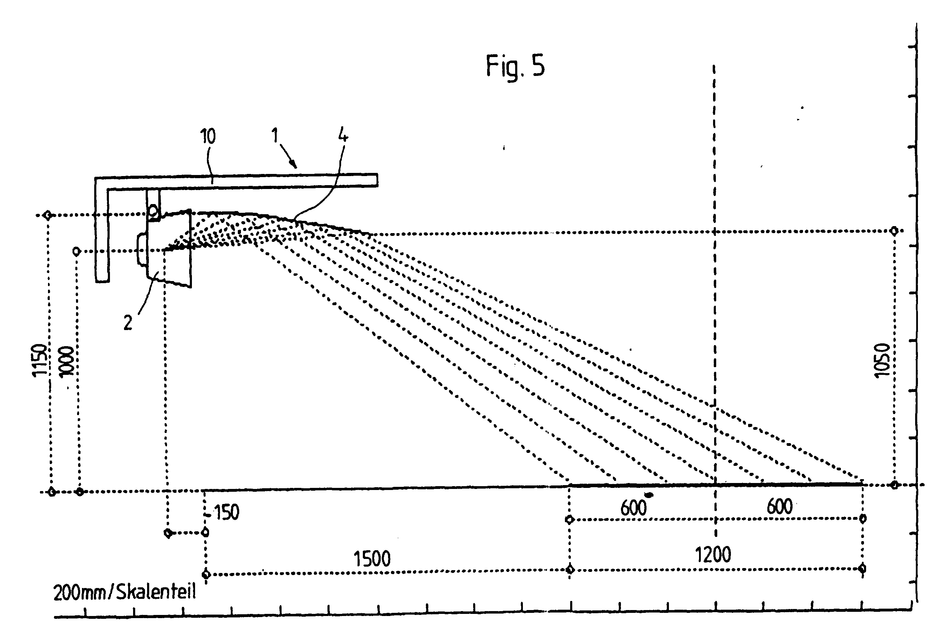

Wie sich aus den Figuren 4 und 5 ergibt, kann der Beleuchtungsbereich mit der erfindungsgemäßen Beleuchtungsvorrichtung 1 optimal eingestellt werden. In Figur 4 befindet sich die Reflektionsfläche 4 in ihrer an der Leuchte angeordneten Position so eingestellt, daß nach etwa einem Meter vom Strahlenaustritt aus dem Leuchtengehäuse ein etwa 1,2 Meter langer beleuchteter Überwachungsbereich entsteht. Durch Absenken der Reflektionsfläche läßt sich dieser Überwachungsbereich gemäß Figur 5 in einen anderen Abstand von der Beleuchtungsvorrichtung verlegen. Die in den Figuren 4 und 5 angegebenen Maße sind nur beispielhaft zur Erläuterung des Ausführungsbeispieles gewählt.

### Bezugszeichenliste

- 1: Beleuchtungsvorrichtung
- 2: Leuchte
- 3: Umlenkreflektor
- 4: Reflektionsfläche
- 5: Verbindungsbereich
- 6: Verstellmimik
- 7: Reflektionslamelle
- 8: Abblendklappe
- 9: Verstellmimik
- 10: Traggerüst
- 11: Augenschraube
- 12: Ansatzprofil
- 13: Schaltschrank
- 14: Bedientafel
- 15: Lampe

## Patentansprüche

1. Beleuchtungsvorrichtung, insbesondere für den Einsatz bei visuellen Qualitätskontrollen, mit wenigstens einer Lichtquelle (2), wenigstens einem Umlenkreflektor (3) und wenigstens einer Reflektionsfläche (4), wobei das von der Lichtquelle (2) auf die Umlenkreflektoren strahlende Licht auf die Reflektionsfläche umgelenkt wird, von welcher es sowie das von der Lichtquelle (2) direkt auf die Reflektionsfläche (4) strahlene Licht auf die ausserhalb der Vorrichtung liegende zu beleuchtende Fläche reflektiert wird,
**dadurch gekennzeichnet,**
daß die wenigstens eine Lichtquelle (2), der wenigstens eine Umlenkreflektor (3) und die wenigstens eine Reflektionsfläche (4) miteinander zu einer Baugruppe verbunden sind.

2. Beleuchtungsvorrichtung nach Anspruch 1, dadurch gekennzeichnet, daß die Lichtquelle eine Leuchte (2) mit einer im wesentlichen rechteckigen Frontfläche ist.

3. Beleuchtungsvorrichtung nach einem der Ansprüche 1 oder 2, dadurch gekennzeichnet, daß der Umlenkreflektor (3) an der Lichtquelle befestigt ist.

4. Beleuchtungsvorrichtung nach einem der vorhergehenden Ansprüche, dadurch gekennzeichnet, daß die Reflektionsfläche (4) im Umlenkreflektor (3) angeordnet ist.

5. Beleuchtungsvorrichtung nach einem der vorhergehenden Ansprüche, dadurch gekennzeichnet, daß die Reflektionsfläche (4) ein Lichtsegel ist.

6. Beleuchtungsvorrichtung nach Anspruch 5, dadurch gekennzeichnet, daß das Lichtsegel aus einzelnen Reflektionslamellen (7) besteht.

7. Beleuchtungsvorrichtung nach einem der vorhergehenden Ansprüche, dadurch gekennzeichnet, daß die Reflektionsfläche (4) relativ zum Strahlengang des Lichtes verstellbar ist.

8. Beleuchtungsvorrichtung nach Anspruch 6, dadurch gekennzeichnet, daß die einzelnen Reflektionslamellen (7) relativ zum Strahlengang des Lichtes verstellbar sind.

9. Beleuchtungsvorrichtung nach einem der vorhergehenden Ansprüche, dadurch gekennzeichnet, daß in dem Umlenkreflektor (3) eine Abblendklappe (8) angeordnet ist.

10. Beleuchtungsvorrichtung nach Anspruch 9, dadurch gekennzeichnet, daß die Abblendklappe (8) verstellbar ist.

11. Beleuchtungsvorrichtung nach einem der vorhergehenden Ansprüche, dadurch gekennzeichnet, daß die Baugruppe an einem Traggerüst (10) befestigt ist.

12. Beleuchtungsvorrichtung nach Anspruch 11, dadurch gekennzeichnet, daß das Traggerüst aus Leichtbauprofilen hergestellt ist.

13. Beleuchtungsvorrichtung nach einem der Ansprüche 11 oder 12, dadurch gekennzeichnet, daß an dem Traggerüst ein Schaltschrank (13) für die Beleuchtungsvorrichtung befestigt ist.

## Claims

1. Illuminating device, in particular for use in visual quality inspections, having at least one light source (2), and at least one deflecting reflector (3) and at least one reflecting surface (4), the light which radiates from the light source (2) onto the deflecting reflectors being deflected onto the reflecting surface, from which it as well as the light radiating from the light source (2) directly onto the reflecting surface (4) is reflected onto the surface to be illuminated, which is situated outside the device, characterized in that the at least one light source (2), the at least one deflecting reflector (3) and the at least one reflecting surface (4) are connected to one another to form an assembly.

2. Illuminating device according to Claim 1, characterized in that the light source is a luminaire (2) with an essentially rectangular front surface.

3. Illuminating device according to one of Claims 1 or 2, characterized in that the deflecting reflector (3) is fastened to the light source.

4. Illuminating device according to one of the preceding claims, characterized in that the reflecting surface (4) is arranged in the deflecting reflector (3).

5. Illuminating device according to one of the preceding claims, characterized in that the reflecting surface (4) is a light sail.

6. Illuminating device according to Claim 5, characterized in that the light sail comprises individual reflecting vanes (7).

7. Illuminating device according to one of the preceding claims, characterized in that the reflecting surface (4) can be adjusted relative to the beam path of the light.

8. Illuminating device according to Claim 6, characterized in that the individual reflecting vanes (7) can be adjusted relative to the beam path of the light.

9. Illuminating device according to one of the preceding claims, characterized in that a dim-out cap (8) is arranged in the deflecting reflector (3).

10. Illuminating device according to Claim 9, characterized in that the dim-out cap (8) is adjustable.

11. Illuminating device according to one of the preceding claims, characterized in that the assembly is fastened to a supporting structure (10).

12. Illuminating device according to Claim 11, characterized in that the supporting structure is produced from lightweight sections.

13. Illuminating device according to one of Claims 11 or 12, characterized in that a switch gear cabinet (13) for the illuminating device is fastened to the supporting structure.

## Revendications

1. Dispositif d'éclairage, en particulier destiné à être utilisé lors de contrôles de qualité visuels, présentant au moins une source lumineuse (2), au moins un réflecteur déviateur (3) et au moins une surface de réflexion (4), la lumière provenant de la source lumineuse (2) et rayonnant sur les réflecteurs déviateurs étant déviée sur la surface de réflexion, depuis laquelle elle est, ainsi que la lumière émanant de la source lumineuse (2) rayonnant directement sur la surface de réflexion (4), réfléchie sur la surface devant être éclairée extérieure au dispositif, caractérisé en ce que,
la source lumineuse minimum (2), le réflecteur déviateur minimum (3) et la surface de réflexion minimum (4) sont reliés entre-eux en un sous-ensemble.

2. Dispositif d'éclairage selon la revendication 1, caractérisé en ce que la source lumineuse est constituée d'une lampe (2) dont la surface frontale est pour l'essentiel rectangulaire.

3. Dispositif d'éclairage selon l'une des revendications 1 ou 2, caractérisé en ce que le réflecteur déviateur (3) est fixé à la source lumineuse.

4. Dispositif d'éclairage selon l'une quelconque des revendications précédentes, caractérisé en ce que la surface de réflexion (4) est disposée à l'intérieur du réflecteur déviateur (3).

5. Dispositif d'éclairage selon l'une quelconque des revendications précédentes, caractérisé en ce que la surface de réflexion (4) est une toile lumineuse.

6. Dispositif d'éclairage selon la revendication 5, caractérisé en ce que la toile lumineuse se compose de lamelles de réflexion individuelles (7).

7. Dispositif d'éclairage selon l'une quelconque des revendications précédentes, caractérisé en ce que la surface de réflexion (4) est règlable par rapport à la trajectoire de rayonnement de la lumière.

8. Dispositif d'éclairage selon la revendication 6, caractérisé en ce que les lamelles de réflexion individuelles (7) sont règlables par rapport à la trajectoire de rayonnement de la lumière.

9. Dispositif d'éclairage selon l'une quelconque des revendications précédentes, caractérisé en ce qu'un volet obturateur (8) est disposé à l'intérieur du réflecteur déviateur (3).

10. Dispositif d'éclairage selon la revendication 9, caractérisé en ce que le volet obturateur (8) est règlable.

11. Dispositif d'éclairage selon l'une quelconque des revendications précédentes, caractérisé en ce que le sous-groupe est fixé à un cadre de support (10).

12. Dispositif d'éclairage selon la revendication 11, caractérisé en ce que le cadre de support est fabriqué à partir de profilés légers.

13. Dispositif d'éclairage selon l'une des revendications 11 ou 12, caractérisé en ce qu'une armoire électrique (13) destinée au dispositif d'éclairage est fixée au cadre de support.
